# EUROPEAN PATENT APPLICATION

(11) **EP 3 473 872 A1**
(43) Date of publication of application: **24.04.2019**
(21) Application number: 17812616.5
(22) Date of filing: 08.06.2017
(51) Int. Cl.: F16B 37/14

(54) **QUICK-CONNECTING THREAD MECHANISM**

(30) Priority: 17.06.2016 CN 201620589182 U
(71) Applicant: Jiangsu SMTP Technology Co., Ltd., Zhangjiagang, Jiangsu 215634 (CN)
(72) Inventor: FENG, Zhen, Zhangjiagang, Jiangsu 215634 (CN); CAO, Qun, Zhangjiagang, Jiangsu 215634 (CN)
(74) Representative: Balder IP Law, S.L.
(86) International application number: PCT/CN2017/087541
(87) International publication number: WO 2017/215505

(57) **Abstract**

Disclosed is a quick-connected thread mechanism comprising an internally-threaded body (1) having internal threads and an externally-threaded body (4) used for matching with the internally-threaded body(1), the internal threads of the internally-threaded body (1) including a plurality of sets of intermittent internal threads (3) circumferentially separated by a plurality of internally-cut faces (2), a plurality of internal thread lines in each set of intermittent internal threads (3) are axially aligned. The external thread of the external ly-threaded body (4) include a plurality of sets of intermittent external threads circumferentially separated by a plurality of external ly-cut faces (5), and a plurality of external thread lines in each set of intermittent external threads (6) being axially aligned. When the externally-threaded body (4) is used in conjunction with the internally-threaded (1) body, the plurality of internally-cut faces (2) correspond to the plurality of sets of intermittent external threads (6) in shape and number, and the plurality of externally-cut faces (5) corresponds to the plurality of sets of intermittent internal threads (3) in shape and number. The quick-connected thread mechanism of the invention is simple in structure, convenient for manufacture, of low cost, and convenient and durable.

## Description

### TECHNICAL FIELD

The present disclosure relates to the field of medical devices, and in particular to a medical connecting mechanism, and more particularly to a threaded connecting mechanism.

### BACKGROUND OF THE INVENTION

In an ultrasound surgery, different surgical instruments are often connected to an ultrasound device depending on the need of the surgery. Operators typically use a threaded connection to achieve the connecti on.

Threaded connections are commonly used in mechanical construction. It has the advantages including simple for manufacture, convenient for use, reliable in connection, good versatility, excellent detachable performance and reusability. However, the connection requires multiple rotations of an inner thread and an outer thread to achieve effective connection. For some occasions in which the requirements for axial loads are not very high, but fast connection is required, the traditional threaded connection cannot meet the requirements for quick connection.

### SUMMARY OF THE INVENTION

In view of the existing problems, the present disclosure provides a quick-connected thread mechanism comprising an internally-threaded body having an internal thread and an externally-threaded body used for matching with the internally-threaded body, the internal thread of the internally-threaded body including a plurality of sets of intermittent internal threads circumferentially separated by a plurality of internally-cut faces, a plurality of internal thread lines in each set of the intermittent internal threads being axial ly aligned; the external thread of the externally-threaded body including a plurality of sets of intermittent external threads circumferentially separated by a plurality of externally-cut faces, and a plurality of external thread lines in each set of intermittent external threads being axial ly aligned. When the external ly-threaded body is used in conjunction with the internally-threaded body, the plurality of internal cut faces correspond to the plurality of sets of intermittent external threads in shape and number, and the plurality of externally-cut faces corresponds to the plurality of sets of intermittent internal threads in shape and number.

In the quick-connected thread mechanism in the disclosure, the threads and the cut faces are alternately arranged. When being used, the threads are aligned with the cut faces and insert into the cut faces quickly, and the threads are inserted into a certain position followed by a certain angle of rotation, so that the thread mechanism can be quickly connected. Therefore, with the quick-connected thread mechanism in the disclosure, a simple and quick connection can be made without multiple rotations.

According to the quick-connected thread mechanism of the present disclosure, preferably, the plurality of internally-cut faces are evenly distributed on an inner circumference of the internal ly-threaded body, and correspondingly, the plurality of sets of intermittent external threads are distributed on an outer circumference of the externally-threaded body in a same arrangement as the internally-cut faces.

According to the quick-connected thread mechanism of the present disclosure, preferably, the plurality of internally-cut faces are unevenly distributed on an inner circumference of the internally-threaded body, and correspondingly, the plurality of sets of intermittent external threads are distributed on an outer circumference of the externally-threaded body in a same arrangement as the internally-cut faces.

According to the quick-connected thread mechanism of the present disclosure, preferably, the thread of the externally-threaded body is one of a left-handed thread or a right-handed thread, and correspondingly, the thread of the internally-threaded body used in conj uncti on with the externally-threaded body is also one of a left-handed thread or a right-handed thread.

According to the quick-connected thread mechanism of the present disclosure, preferably, the thread of the externally-threaded body is a single thread or a multiple thread, and correspondingly, the thread of the i nternally-threaded body used in conjunction with the external ly-threaded body is a single thread or a multiple thread.

In accordance with the quick-connected thread mechanism of the present disclosure, preferably, the externally-threaded body further includes a full-circle external thread.

According to the quick-connected thread mechanism of the present disclosure, preferably, the full-circle external thread of the externally-threaded body includes at least one turn of thread, and the full-circle external thread is disposed at a position near the root of the externally-threaded body.

In accordance with the quick-connected thread mechanism of the present disclosure, preferably, the internally-threaded body further incl udes a full-circle internal thread.

According to the quick-connected thread mechanism of the present disclosure, it is preferable that the full-circle internal thread of the i nternally-threaded body includes at least one turn of thread, and the full-circle internal thread is disposed at a position near the bottom of a threaded hole of the i nternally-threaded body.

In accordance with the quick-connected thread mechanism of the present disclosure, preferably, the internally-threaded body is a cylindrical threaded body or a conical threaded body, and the externally-threaded body is correspondingly a cylindrical threaded body or a conical threaded body.

According to the quick-connected thread mechanism of the present disclosure, the intermittent threads are alternately arranged with the cut faces. When being used, the intermittent threads are aligned with the cut faces and quickly inserted into the cut faces, and the intermittent threads are inserted into a certain position followed by a certain angle of rotation, so the thread mechanism can be quickly connected. With the quick-connected thread mechanism of the present disclosure, a simple and quick connection without multiple rotations can be made. The quick-connected thread mechanism of the disclosure is simple in structure, convenient for manufacture, of low cost, and successfully solves the problem of quickly and conveniently connecting medical instruments in a reliable way in medical operations.

### BRIEF DESCRIPTION OF THE DRAWINGS

In order to more clearly illustrate embodiments of the present disclosure or the technical solutions in the prior art, the drawings to be used in the description of the embodiments or the prior art will be briefly descri bed below.
Fig. 1 is a cross-sectional view showing an embodiment of a quick-connected thread mechanism of the present disclosure;
Fig. 2 is a perspective view of an embodiment of an internally-threaded body of the quick-connected thread mechanism of the present disclosure;
Fig. 3 is a front elevational view showing an embodiment of an internally-threaded body of the quick-connected thread mechanism of the present disclosure;
Fig. 4 is a perspective view of an embodiment of an externally-threaded body of the quick-connected thread mechanism of the present disclosure;
Fig. 5 is a front elevational view of an embodiment of an externally-threaded body of the quick-connected thread mechanism of the present disclosure.

### Reference Numerals:

1\ internally-threaded body; 2\ internally-cut face; 3\ intermittent internal thread; 4\ externally-threaded body; 5\ externally-cut face; 6\ intermittent external thread; 7\ full-circle external thread; 8\ full-circle internal thread.

### DETAILED DESCRIPTION OF THE INVENTION

Exemplary embodiments of the present disclosure will be described hereinafter clearly and completely with reference to the attached drawings. Apparently, the embodiments described herein are only portions of embodiments of the disclosure, rather than all embodiments of the disclosure. It is intended that all other embodiments obtained by those skilled in the art accordi ng to the disclosed embodiments without inventive labor are within the scope of the present disclosure.

In the description of the present disclosure, it is to be noted that the terms of Φ centerX , Φ upperX, Φ lowerX, Φ leftX, Φ rightX, Φ verticalX, Φ horizontalX, Φ internalX, Φ externalX and the like simply indicate orientational or positional relationship based on the accompanying drawings and are used only for the purpose of facilitating and simplifying the description of the invention, rather than specifying or implying that any device or elements indicated must have a certain orientation, consti tute with a certain orientation, or operate in a certain orientation. Therefore, these terms will not be interpreted as limiting the present disclosure. Further, the terms of Φ firstX, Φ secondX and Φ thirdX are only used for descri pti on purpose, rather than being interpreted as specifying or implying relative importance.

In the description of the present disclosure, it is to be noted that, unless otherwise specified or defi ned clearly, the term of Φ attach, Φ connect toX , Φ connect withX, Φ coupleX and the like should be interpreted broadly. For example, they may refer to fixed connection, or detachable connection, or integral connection; they may refer to mechanical connection, or electrical connection; they may refer to direct connection, or indirect connection through an intermediate agent, or internal communication between two components. For those skilled in the art, the specific meaning of these terms in the present disclosure may be understood in combination with specific situations or contexts.

The present invention will be further described in detail below through specific embodiments and in conjunction with the accompanying drawings.

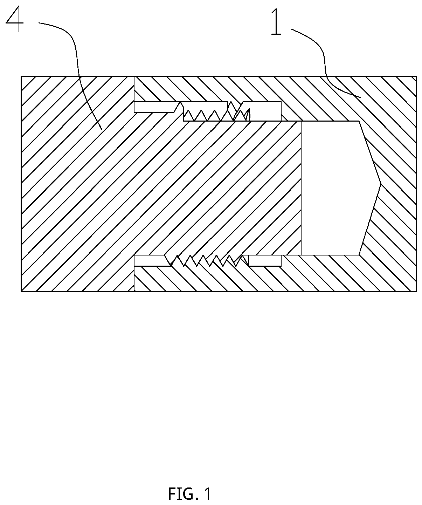

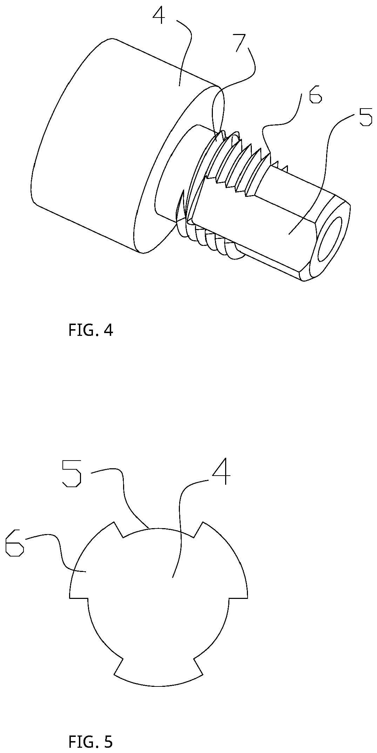

Referring to Figs. 1 to 5, a quick-connected thread mechanism of the present disclosure includes an internally-threaded body 1 having an internal thread as well as an external ly-threaded body 4 used for matching with the internally-threaded body 1. The internal thread of internal ly-threaded body 1 including a plurality of sets of intermittent internal threads 3 circumferentially separated by a plurality of internally-cut face 2. A plurality of internal thread lines in each set of intermittent internal threads 3 are axially aligned. The external thread of externally-threaded body 4 includes a plurality of sets of intermittent external threads 6 that are circumferentially separated by a plurality of externally-cut faces 5, and a plurality of external thread lines in each set of intermittent external threads 6 are axially aligned. When externally-threaded body 4 is used matching with internally-threaded body 1, the plurality of internally-cut faces 2 match the plurality of sets of intermittent external threads 6 in shape and number, and the plurality of external ly-cut faces 5 match the plurality of sets of intermittent internal threads 3 in shape and number.

The intermittent threads of the quick-connected thread mechanism of the present disclosure are alternately arranged with the cut faces. When being used, intermittent external threads 6 are aligned with internally-cut faces 2 and accordingly intermittent internal threads 3 aligned with externally-cut faces 5, in this way, an insertion is made quickly. When a proper insertion is made followed by a rotation to a certain angle, the thread mechanism can be quickly connected. With the quick-connected thread mechanism of the present disclosure, a simple and quick connection can be made without multiple rotations.

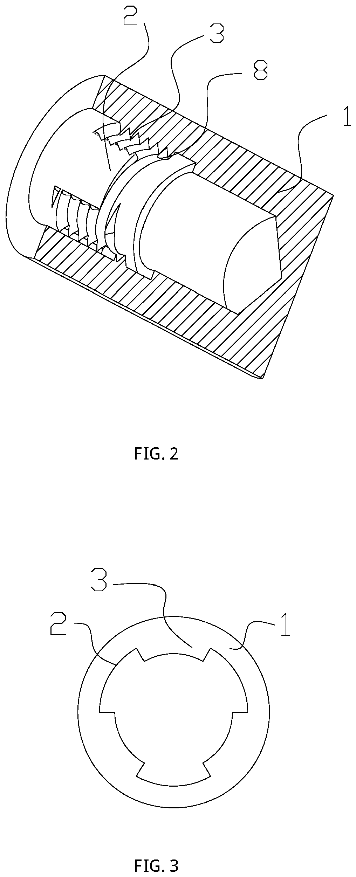

As shown in Fig. 2 to Fig. 5, in the quick-connected thread mechanism of the present disclosure, the plurality of internally-cut faces 2 of the internally-threaded body 1 may be evenly distributed on the inner circumference of inner-threaded body 1, and correspondingly, the plurality of sets of intermittent external threads 6 on externally-threaded body 4 may also be distributed evenly on the outer surface of externally-threaded body 4 in the same arrangement as the internally-cut faces 2.

With the evenly distributed internal and external intermittent threads being used together, an operator may not pay too much attention to positional correspondence between the intermittent threads and the cut faces when connecti ng the thread mechanism, so that a connecti on speed can be further increased.

In the quick-connected thread mechanism of the present disclosure, the plurality of internally-cut faces 2 may also be distributed in a non-homogeneous manner on the inner circumference of internally-threaded body 1, and correspondingly, the plurality of sets of intermittent external threads 6 may also be distributed on the outer surface of externally-threaded body 4 in a same (corresponding) manner with internal ly-cut faces 2.

As long as a space formed by internally-cut faces 2 and cross sections of intermittent internal threads 3 can accommodate intermittent external threads 6, and a space formed by external ly-cut faces 5 and cross sections of intermittent external threads 6 can accommodate intermittent internal threads 3, for non-homogeneously distributed intermittent threads, it is unnecessary to deliberately set a procedure to equally cut threads in the manufacturing process. In this way, the tol erance requirements for machining become wider, and the requirements for machining accuracy are low, so that the yield is greatly improved, the working efficiency of machining is improved, the machining cost is reduced, and the time cost is saved, thereby enables this product a low price and an easy use.

In the quick-connected thread mechanism of the present disclosure, the thread of externally-threaded body 4 may be one of a left-handed thread or a right-handed thread, and correspondingly, the thread of internally-threaded body 1 used matching with externally-threaded body 4 may also be one of a left-handed thread or a right-handed thread.

Both a left-handed thread and a right-handed thread can be used in a quick-connected thread mechanism of the present disclosure, which greatly expands the application range of the present disclosure.

In the quick-connected thread mechanism of the present disclosure, the thread of externally-threaded body 4 may be a single thread or a multiple thread, and correspondingly, the thread of internally-threaded body 1 used in conjunction with the externally-threaded body 4 may be a single thread or a multiple thread.

Both a single-turn thread and a multiple-turn thread can be used in a quick-connected thread mechanism of the present disclosure, which greatly expands the application range of the present disclosure.

In the quick-connected thread mechanism of the present disclosure, external ly-threaded body 4 may further include a full-circle external thread 7, and the full-circle external thread 7 of externally-threaded body 4 may include at least one turn of thread. Full-circle external thread 7 is disposed at a position near the root of externally-threaded body 4.

In the quick-connected thread mechanism of the present disclosure, internally-threaded body 1 may further include a full-circle internal thread 8, and the full-circle internal thread 8 of i nternally-threaded body 1 may include at least one turn of thread. The full-circle internal thread 8 is disposed at a position near the bottom of a threaded hole of the internally-threaded body 1.

The arrangement of the full-circle thread can increase an axial connection force of the quick-connected thread mechanism of the present disclosure.

In the quick-connected thread mechanism of the present disclosure, the internally-threaded body 1 is a cylindrical threaded body or a conical threaded body, and the externally-threaded body 4 is correspondingly a cylindrical threaded body or a conical threaded body. The thread profile may be any of a triangular thread, a rectangular thread, a trapezoidal thread, and a buttress thread.

Both cylindrical threaded body and conical threaded body can be used in a quick-connected thread mechani sm of the present di scl osure, and threads of any thread profile can also be used in a quick-connected thread mechanism of the present disclosure, which greatly expands the application range of this present di scl osure.

A process for using the quick-connected thread mechanism of the present disclosure is as follows: aligning the matching internally-cut faces 2 with intermittent external threads 6 and aligning externally-cut faces 5 with intermittent internal threads 3, such that internally-threaded body 1 can move quickly in an axial direction relative to externally-threaded body 4. When a leading portion of internally-threaded body 1 is moved to a position near the root of external ly-threaded body 4, a rotation of a fixed angle is made, thereby screwing intermittent external threads 3 into intermittent internal threads 6 to achieve a connecti on of the thread mechani sm.

The beneficial technical effects of the quick-connected thread mechanism of the present disclosure include: the intermittent threads are alternately arranged with the cut faces, then when being used, the intermittent threads are aligned with the cut faces and quickly inserted into the cut faces, and after being inserted into a proper position, a rotation of a certain angle is made, so the thread mechanism can be quickly connected. With the quick-connected thread mechanism of the invention, a simple and quick connection can be realized without multiple rotations. The quick-connected thread mechanism of the invention is si mple in structure, convenient for manufacture, of low cost, convenient, and durable. When the quick-connected thread mechanism in the present disclosure is used to replace a surgical instrument, because of its characteristics of quick connection, the operation time can be greatly shortened, the patient's pain can be reduced, and the labor intensity of the doctor can also be decreased.

Finally, it should be noted that the above embodiments are merely illustrative of the technical solutions of the present disclosure, and are not intended to be limiting; although the present disclosure has been described in detail with reference to the foregoing embodiments, those of ordinary skill in the art would appreciate that the technical solutions described in the foregoi ng embodiments may be modified, or some or all of the technical features therein may be equivalently substituted; and these modifications or substitutions do not make the associated sol utions deviate from the scope of the technical solutions of the embodiments of the present disclosure.

## Claims

1. A quick-connected thread mechanism comprising an internally-threaded body having internal threads and an externally-threaded body used for matching with the internally-threaded body, wherein
the internal thread of the internally-threaded body includes a plurality of sets of intermittent internal threads circumferentially separated by a plurality of internally-cut faces, and a plurality of internal thread lines of each set of intermittent internal threads are axially aligned;
an external thread of the externally-threaded body includes a plurality of sets of intermittent external threads circumferentially separated by a plurality of externally-cut faces, and a plurality of external thread lines in each set of i ntermi ttent external threads are axially aligned;
when the externally-threaded body is used matching with the internally-threaded body, the plurality of internally-cut faces correspond to the plural ity of sets of intermittent external threads in shape and number, and the plurality of externally-cut faces corresponds to the plural ity of sets of intermittent internal threads in shape and number.

2. The quick-connected thread mechanism according to claim 1, wherein
the plurality of internally-cut faces are evenly distributed on an inner circumference of the internally-threaded body, and correspondingly, the plurality of sets of intermittent external threads are distributed on an outer surface of the externally-threaded body in a same arrangement as the i nternally-cut faces.

3. The quick-connected thread mechanism according to claim 1, wherein
the plurality of internally-cut faces are unevenly distributed on an inner circumference of the internally-threaded body, and correspondingly, the plurality of sets of intermittent external threads are distributed on an outer surface of the external ly-threaded body in a same arrangement as the i nternally-cut faces.

4. The quick-connected thread mechanism according to claim 1, wherein
a thread of the externally-threaded body is a left-handed thread or a right-handed thread, and correspondingly, a thread of the interrolly-threaded body used matching with the external ly-threaded body is also a left-handed thread or a right-handed thread.

5. The quick-connected thread mechanism according to claim 1, wherein
a thread of the externally-threaded body is a single thread or a multiple thread, and correspondingly, a thread of the internally-threaded body used matching with the externally-threaded body is a single thread or a multiple thread.

6. The quick-connected thread mechanism according to claim 1, wherein
the externally-threaded body further includes a full-circle external thread.

7. The quick-connected thread mechanism according to claim 6, wherein
the full-circle external thread of the externally-threaded body includes at least one turn of thread, and the full-circle external thread is disposed at a position near the root of the externally-threaded body.

8. The quick-connected thread mechanism according to claim 1, wherein
the internally-threaded body further includes a full-circle internal thread.

9. The quick-connected thread mechanism according to claim 8, wherein
the full-circle internal thread of the internally-threaded body includes at least one turn of thread, and the full-circle internal thread is disposed at a position near the bottom of a threaded hole of the internally-threaded body.

10. The quick-connected thread mechanism according to claim 1, wherein
the internally-threaded body is one of a cylindrical threaded body or a conical threaded body, and the externally-threaded body is correspondingly one of a cylindrical threaded body or a conical threaded body.
